# EUROPÄISCHE PATENTSCHRIFT

(11) **EP 2 759 009 B1**
(45) Veröffentlichungstag und Bekanntmachung des Hinweises auf die Patenterteilung: **30.10.2019**
(21) Anmeldenummer: 12758833.3
(22) Anmeldetag: 07.09.2012
(51) Int. Cl.: H01M 4/88, H01M 8/0234, H01M 8/0245

(54) **GASDIFFUSIONSSCHICHT MIT VERBESSERTER ELEKTRISCHER LEITFÄHIGKEIT UND GASDURCHLÄSSIGKEIT**
GAS DIFFUSION LAYER WITH IMPROVED ELECTRICAL CONDUCTIVITY AND GAS PERMEABILITY
COUCHE DE DIFFUSION DE GAZ AVEC UNE CONDUCTIBILITÉ ÉLECTRIQUE AMÉLIORÉE ET PERMÉABILITÉ AU GAZ

(30) Priorität: 21.09.2011 DE 102011083118
(43) Veröffentlichungstag der Anmeldung: 30.07.2014
(73) Patentinhaber: SGL Carbon SE, 65201 Wiesbaden (DE); FutureCarbon GmbH, 95448 Bayreuth (DE)
(72) Erfinder: WILDE, Peter, 86405 Meitingen (DE); SCHWEISS, Rüdiger, 86405 Meitingen (DE); FORERO, Stefan, 95466 Weidenberg (DE); HABERKORN, Melanie, 95473 Haag (DE); SCHUBERT, Tim, 95448 Bayreuth (DE)
(86) Internationale Anmeldenummer: PCT/EP2012/067536
(87) Internationale Veröffentlichungsnummer: WO 2013/041393

(56) Entgegenhaltungen:
- WO-A1-2007/089119
- WO-A2-03/054990
- WO-A2-2004/062020
- CN-A- 101 540 405
- CN-B- 101 591 868
- CN-B- 101 771 155
- JP-A- 59 025 179
- JP-A- 59 028 581
- KR-A- 20090 080 160
- US-A1- 2010 092 840
- US-A1- 2010 255 402
- US-A1- 2011 171 559
- "DIN 1342-1. Viskosität - Teil 1: Rheologische Begriffe = Viscosity - Part 1: Rheological concepts", DEUTSCHE NORMEN. DIN NORM, XX, XX, vol. 1342-1, 1 October 1983 (1983-10-01), pages 54-63, XP009121255,
- GHARIBI H ET AL: "The synergy between multi-wall carbon nanotubes and Vulcan XC72R in microporous layers", INTERNATIONAL JOURNAL OF HYDROGEN ENERGY, ELSEVIER SCIENCE PUBLISHERS B.V., BARKING, GB, vol. 35, no. 17, 1 September 2010 (2010-09-01), pages 9241-9251, XP027226068, ISSN: 0360-3199 [retrieved on 2010-02-23]
- Anonymous: "Schergeschwindigkeit - Wikipedia", , 1 December 2017 (2017-12-01), XP055440828, Retrieved from the Internet: URL:https://de.wikipedia.org/wiki/Scherges chwindigkeit [retrieved on 2018-01-15]

## Beschreibung

Die vorliegende Erfindung betrifft eine Gasdiffusionsschicht, ein Verfahren zum Herstellen einer solchen Gasdiffusionsschicht, die Verwendung einer solchen Gasdiffusionsschicht, eine Gasdiffusionselektrode sowie die Verwendung einer solchen Gasdiffusionselektrode.

Derartige Gasdiffusionsschichten und Gasdiffusionselektroden werden bei einer Vielzahl von Anwendungen eingesetzt, und zwar insbesondere in Brennstoffzellen, in Elektrolysezellen und in Batterien. Brennstoffzellen sind elektrochemische Zellen, welche beispielsweise als eine Antriebsquelle für Kraftfahrzeuge als Ersatz für Verbrennungsmotoren vorgeschlagen worden sind. Bei dem Betrieb einer Brennstoffzelle wird ein Brennstoff, wie beispielsweise Wasserstoff oder Methanol, mit einem Oxidationsmittel, üblicherweise Luft, an einem Katalysator elektrochemisch umgesetzt, und zwar in dem Fall von Wasserstoff als Brennstoff zu Wasser und in dem Fall von Methanol als Brennstoff zu Wasser und Kohlendioxid. Zu diesem Zweck umfassen Polymerelektrolyt-Brennstoffzellen (PEM-Brennstoffzellen) eine Membranelektrodenanordnung (MEA), welche aus einer dünnen protonendurchlässigen, nicht elektrisch leitenden, festen Polymerelektrolytmembran, wobei auf einer der Seiten der Membran ein Anodenkatalysator und auf der gegenüberliegenden Seite der Membran ein Kathodenkatalysator angeordnet ist, aufgebaut ist. Bei dem Betrieb einer PEM-Brennstoffzelle werden an der Anode aus dem Brennstoff Protonen und Elektronen freigesetzt, welche an der Kathode mit Sauerstoff zu Wasser reagieren. Während die Protonen von der Anode durch die Polymerelektrolytmembran zu der Kathode transportiert werden, wandern die Elektronen über einen externen Stromkreis von der Anode zu der Kathode. Die zwischen der Anode und Kathode anfallende Spannung kann beispielsweise genutzt werden, um einen Elektromotor anzutreiben.

Um in der Brennstoffzelle einen wirksamen und insbesondere gleichmäßigen Gastransport zu gewährleisten, nämlich einen wirksamen und gleichmäßigen Transport der Reaktandengase Wasserstoff zu der Anode sowie Sauerstoff zu der Kathode, sind auf den beiden gegenüberliegenden Seiten der MEA üblicherweise jeweils ein poröses Gasdiffusionsmedium bzw. eine Gasdiffusionsschicht (GDL) vorgesehen. Jede dieser Gasdiffusionsschichten kontaktiert an ihrer der MEA gegenüberliegenden Seite eine die Brennstoffzelle gegenüber benachbarten Brennstoffzellen abschließende Bipolarplatte. Abgesehen von der Sicherstellung eines wirksamen und gleichmäßigen Transports der Reaktandengase zu den Elektroden müssen die Gasdiffusionsschichten auch den Abtransport des in der Brennstoffzelle gebildeten Produkts Wasser aus der Brennstoffzelle gewährleisten. Zudem dienen die Gasdiffusionsschichten auch als Stromkollektoren und Stromleiter, um die an der Anode freigesetzten Elektronen an die entsprechende Bipolarplatte und über diese aus der Brennstoffzelle herauszuleiten und um der Kathode über die auf der entgegengesetzten Seite der Brennstoffzelle angeordnete Bipolarplatte Elektronen zuzuleiten. Um diese Funktionen erfüllen zu können, muss eine Gasdiffusionsschicht eine möglichst hohe elektrische Leitfähigkeit sowie eine hohe Gasdurchlässigkeit aufweisen.

Solche Gasdiffusionsschichten sind üblicherweise aus porösem Carbonfaserpapier oder Carbonfaservlies zusammengesetzt. Um bei dem Betrieb einer Brennstoffzelle ein Fluten der Poren der Gasdiffusionsschicht mit Wasser zu verhindern, welches den Gastransport in der Gasdiffusionsschicht unterbinden würde, ist üblicherweise zumindest die der MEA zugewandte Seite der Gasdiffusionsschicht hydrophob ausgestaltet, beispielsweise durch eine Beschichtung dieser Seite mit einer hydrophoben Substanz oder durch Imprägnieren der Gasdiffusionsschicht mit einer hydrophoben Substanz. Ferner ist auf der der MEA zugewandten Seite des Carbonfaserpapiers bzw. Carbonfaservlieses herkömmlicherweise eine mikroporöse Schicht (MPL) vorgesehen, welche den Wasserstransport in der Brennstoffzelle begünstigt und die Gasdiffusionsschicht an die angrenzende Katalysatorschicht elektrisch ankoppelt und so sowohl die Leistung als auch die Lebensdauer nicht nur der Gasdiffusionsschicht, sondern auch der Brennstoffzelle erhöht. Solche mikroporösen Schichten bestehen üblicherweise aus einer Mischung aus Ruß und hydrophobem Polymer, wie Polytetrafluorethylen, wobei der Ruß die elektrische Leitfähigkeit bewirkt und das hydrophobe Polymer ein Fluten der Gasdiffusionsschicht mit Wasser verhindern soll. Eine solche mikroporöse Schicht wird üblicherweise hergestellt, indem eine Ruß, hydrophobes Polymer und Wasser als Dispersionsmedium enthaltende Dispersion auf das Substrat aus Carbonfaserpapier bzw. Carbonfaservlies aufgebracht und anschließend zur Entfernung des Dispersionsmediums getrocknet wird. Um die Eigenschaften der mikroporösen Schicht zu verbessern, ist es bereits vorgeschlagen worden, der Mischung aus Ruß und hydrophobem Polymer Kohlenstoffnanoröhrchen oder Kohlenstoffnanofasern zuzusetzen. Um ihre Funktionen erfüllen zu können, muss auch die mikroporöse Schicht eine möglichst hohe elektrische Leitfähigkeit sowie eine hohe Gasdurchlässigkeit aufweisen.

Eine mikroporöse Schicht, die Ruß und Kohlenstoffnanoröhrchen enthält, ist im Artikel "The synergy between multi-wall carbon nanotube and Vulcan XC72R in microporous layers", Int. J. Hydrogen Energy, 35 (2010)9241-9251 beschrieben.

Allerdings sind die derzeit bekannten Gasdiffusionsschichten und insbesondere deren mikroporösen Schichten bezüglich ihrer elektrischen Leitfähigkeit und bezüglich ihrer Gasdurchlässigkeit verbesserungsbedürftig. Eine gleichzeitige Verbesserung dieser beiden Eigenschaften wird dadurch erschwert, dass die Gasdurchlässigkeit und die elektrischen Leitfähigkeit einer solchen Schicht nicht miteinander korrelieren, sondern im Gegenteil eine Verbesserung der Gasdurchlässigkeit beispielsweise durch Erhöhen der Porosität üblicherweise eine Verringerung der elektrischen Leitfähigkeit bedingt und umgekehrt eine Erhöhung der elektrischen Leitfähigkeit üblicherweise eine Verringerung der Gasdurchlässigkeit bedingt. Für die Verwendung als Antriebsquelle in einem Kraftfahrzeug müssen die derzeit von Brennstoffzellen erreichten Stromdichten von 1,5 A/cm² auf mehr als 2 A/cm² erhöht werden. Zugleich müssen die Beladungen der Katalysatorschichten mit dem teuren Katalysatormaterial, herkömmlicherweise Platin, verringert werden, um die Kosten der Brennstoffzellen auf ein akzeptables Maß zu senken. Insbesondere bei hohen Stromdichten wird die Leistung einer Brennstoffzelle jedoch vor allem von ihrem elektrischen Widerstand und von dem Massentransport der Reaktionsgase an die Katalysatorschichten begrenzt. Mithin sind die notwendige Erhöhung der Stromdichte sowie die Verringerung der Katalysatorbeladung nur dadurch zu erreichen, dass sowohl die elektrische Leitfähigkeit als auch die Gasdurchlässigkeit der Gasdiffusionsschichten erhöht werden.

Aufgabe der vorliegenden Erfindung ist daher die Bereitstellung einer Gasdiffusionsschicht, welche eine erhöhte elektrische Leitfähigkeit aufweist und sich gleichzeitig durch eine erhöhte Gasdurchlässigkeit auszeichnet.

Erfindungsgemäß wird diese Aufgabe gelöst durch eine Gasdiffusionsschicht, welche ein Substrat aus kohlenstoffhaltigem Material sowie eine mikroporöse Schicht umfasst, wobei die Gasdiffusionsschicht durch ein Verfahren erhältlich ist, welches die nachfolgenden Schritte umfasst:
i) Dispergieren einer Ruß mit einer BET-Oberfläche von maximal 200 m²/g, Kohlenstoffnanoröhrchen mit einer BET-Oberfläche von wenigstens 200 m²/g sowie mit einem mittleren Außendurchmesser (d₅₀) von maximal 25 nm und Dispersionsmedium enthaltenden Mischung mit einer Schergeschwindigkeit von wenigstens 1.000 Sekunden⁻¹ und/oder so, dass in der hergestellten Dispersion wenigstens 90 % aller Kohlenstoffnanoröhrchen eine mittlere Agglomeratgröße von maximal 25 µm aufweisen, wobei die Summe der Mengen an Ruß und Kohlenstoffnanoröhrchen bezogen auf die Gesamtmenge der Mischung 1 bis 15 Gew.-% beträgt,
ii) Aufbringen der in dem Schritt i) hergestellten Dispersion auf wenigstens ein Teilstück von wenigstens einer Seite des Substrats und
iii) Trocknen der in dem Schritt ii) aufgetragenen Dispersion zwecks wenigstens teilweiser Entfernung des Dispersionsmediums unter Ausbildung der mikroporösen Schicht.

Diese Lösung beruht auf der überraschenden Erkenntnis, dass durch die Kombination von erstens dem Einsatz von spezifischem Ruß, nämlich von Ruß mit einer vergleichsweise geringen spezifischen Oberfläche, von zweitens dem Einsatz von spezifischen Kohlenstoffnanoröhrchen, nämlich von Kohlenstoffnanoröhrchen mit einer vergleichsweise hohen spezifischen Oberfläche und mit einem vergleichsweise geringen mittleren Außendurchmesser, und von drittens einem vergleichsweise hohen Homogenisierungsgrad der zur Herstellung der mikroporösen Schicht eingesetzten Ruß, Kohlenstoffnanoröhrchen und Dispersionsmedium enthaltenden Dispersion eine eine mikroporöse Schicht umfassende Gasdiffusionsschicht erhalten wird, welche im Vergleich zu den derzeit bekannten Gasdiffusionsschichten nicht nur eine erhöhte elektrische Leitfähigkeit aufweist, sondern sich insbesondere auch durch eine verbesserte Gasdurchlässigkeit auszeichnet. Dabei wirken die drei vorstehend genannten Maßnahmen überraschenderweise synergistisch zusammen. Erfindungsgemäß ist es wesentlich, dass die Ruß, Kohlenstoffnanoröhrchen und Dispersionsmedium enthaltende Mischung mit einer Schergeschwindigkeit von wenigstens 1.000 Sekunden⁻¹ und/oder so, dass in der hergestellten Dispersion wenigstens 90 % aller Kohlenstoffnanoröhrchen eine mittlere Agglomeratgröße von maximal 25 µm aufweisen, dispergiert wird, also gewissermaßen eine Paralleldispergierung von Ruß und Kohlenstoffnanoröhrchen stattfindet. Dies führt überraschenderweise zu einer eine mikroporöse Schicht umfassenden Gasdiffusionsschicht mit einer höheren elektrischen Leitfähigkeit und einer höheren Gasdurchlässigkeit als ein entsprechendes, mit den gleichen Ausgangsmaterialien durchgeführtes Verfahren, bei dem anstelle der vorgenannten Paralleldispergierung getrennt voneinander erstens eine Dispersion von Ruß in Dispersionsmedium und zweitens eine Dispersion von Kohlenstoffnanoröhrchen in Dispersionsmedium hergestellt werden, bevor diese beiden Dispersionen ohne Homogenisierung - d.h. ohne Anwendung hoher Scherkräfte - miteinander vermengt werden, oder bei dem erst eine Dispersion von Kohlenstoffnanoröhrchen in Dispersionsmedium hergestellt wird und anschließend dieser Dispersion Ruß ohne weitere Homogenisierung - d.h. ohne Anwendung hoher Scherkräfte - zugegeben wird. Ohne an eine Theorie gebunden werden zu wollen, wird es erachtet, dass dies darauf zurückzuführen ist, dass durch die Paralleldispergierung von Ruß und Kohlenstoffnanoröhrchen mit einer hinreichend hohen Schergeschwindigkeit nicht nur eine optimale Durchmischung von Ruß und Kohlenstoffnanoröhrchen erreicht wird, sondern in der mikroporösen Schicht insbesondere auch eine - im Hinblick auf eine die Gasdurchlässigkeit erhöhende Porosität sowie eine verbesserte elektrische Leitfähigkeit - optimale Ausrichtung der einzelnen Kohlenstoffnanoröhrchen untereinander, eine optimale Ausrichtung zwischen den einzelnen Kohlenstoffnanoröhrchen und den einzelnen Rußpartikeln sowie eine optimale Größe der einzelnen Kohlenstoffnanoröhrchen-Agglomerate erreicht wird. Insgesamt ergibt sich somit aus der Kombination des spezifischen Rußes, der spezifischen Kohlenstoffnanoröhrchen und der Paralleldispergierung eine exzellente Grenzflächenstruktur der einzelnen Partikel in der mikroporösen Schicht, welche zu einer verbesserten elektrischen Leitfähigkeit und gleichzeitig zu einer verbesserten Gasdurchlässigkeit der Gasdiffusionsschicht führt. Insbesondere ermöglicht die Paralleldispergierung auch das Einbringen einer größeren Menge an Kohlenstoffnanoröhrchen in die Dispersion und somit in die mikroporöse Schicht, weil die entsprechenden Mengen bei der Herstellung über getrennte Dispersionen, d.h. einem Verfahren, bei dem anstelle der vorgenannten Paralleldispergierung getrennt voneinander erstens eine Dispersion von Ruß in Dispersionsmedium und zweitens eine Dispersion von Kohlenstoffnanoröhrchen in Dispersionsmedium hergestellt werden, bevor diese beiden Dispersionen ohne Homogenisierung miteinander vermengt werden, aufgrund des starken Viskositätsanstiegs in den Dispersionen mit zunehmenden Mengen an Ruß und Kohlenstoffnanoröhrchen begrenzt ist. Aufgrund der vorstehenden vorteilhaften Eigenschaften eignet sich die erfindungsgemäße Gasdiffusionsschicht insbesondere zur Verwendung in einer mit einer hohen Stromdichte von mehr als 1,5 A/cm² und insbesondere von mehr als 1,6 A/cm² betriebenen Brennstoffzelle.

Im Einklang mit der üblichen Definition dieses Parameters wird unter einem mittleren Außendurchmesser (d₅₀) der Kohlenstoffnanoröhrchen gemäß der vorliegenden Erfindung der Wert des Außendurchmessers verstanden, den 50% der vorliegenden Kohlenstoffnanoröhrchen unterschreiten, d.h. 50% aller vorliegenden der Kohlenstoffnanoröhrchen weisen einen kleineren Außendurchmesser als den d₅₀-Wert auf. Die Messung des mittleren Außendurchmessers der Kohlenstoffnanoröhrchen erfolgt durch Transmissionselektronenmikroskopie (TEM). Dabei werden mindestens 3 TEM-Aufnahmen unterschiedlicher Bereiche der Probe erstellt und ausgewertet, wobei für jede TEM-Aufnahme der Außendurchmesser von wenigstens 10 Kohlenstoffnanoröhrchen bestimmt wird und bei den drei TEM-Aufnahmen insgesamt der Außendurchmesser von wenigstens 50 Kohlenstoffnanoröhrchen bestimmt wird. Aus den so bestimmten Einzelwerten wird dann eine Größenverteilung bestimmt und daraus der mittlere Außendurchmesser berechnet.

Zudem wird die mittlere Agglomeratgröße der Kohlenstoffnanoröhrchen gemäß der vorliegenden Erfindung mit einem Akustik-Spektrometer DT-1201 der Firma Quantachrome GmbH über einen Frequenzbereich von 1 bis 100 MHz bestimmt.

Zur Messung der BET-Oberfläche der Kohlenstoffnanoröhrchen und des Rußes wird gemäß der vorliegenden Erfindung das in der DIN ISO 9277:2003-05 spezifizierte Verfahren eingesetzt.

Die Bestimmung der Schergeschwindigkeit erfolgt gemäß der DIN 1342-1.

Unter Kohlenstoffnanoröhrchen werden im Sinne der vorliegenden Erfindung im Einklang mit der fachüblichen Definition dieses Begriffs röhrenförmige Gebilde aus Kohlenstoff verstanden, welche einen weniger als 1.000 nm großen Außendurchmesser aufweisen. Bei dem Kohlenstoff kann es sich prinzipiell um amorphen oder kristallinen Kohlenstoff handeln, wobei kristalliner Kohlenstoff bevorzugt ist. Besonders bevorzugt ist der Kristallinitätsgrad des Kohlenstoffs der Kohlenstoffnanoröhrchen so hoch, dass die Oxidationsbeständigkeit der Kohlenstoffnanoröhrchen so hoch ist, dass bei der Durchführung einer thermogravimetrischen Analyse (TGA) bei einer Aufheizrate von 10°C mit Luft als umgebendem Gas wenigstens 90 Gew.-% der Probe bei einer Temperatur von 550°C und bevorzugt bei 570°C noch als Feststoff erhalten sind. Ganz besonders bevorzugt ist die Oxidationsbeständigkeit der Kohlenstoffnanoröhrchen so hoch, dass bei der Durchführung der TGA wenigstens 50 Gew.-% der Probe bei einer Temperatur von 615°C noch als Feststoff erhalten sind. Grundsätzlich kann es sich bei den Kohlenstoffnanoröhrchen um geschlossene oder offene röhrenförmige Gebilde handeln. Unabhängig davon, ob diese geschlossen oder offen sind, können diese ungefüllt oder mit einem Gas oder Metall gefüllt sein.

Erfindungsgemäß weisen die zur Herstellung der mikroporösen Schicht der erfindungsgemäßen Gasdiffusionsschicht eingesetzten Kohlenstoffnanoröhrchen einem mittleren Außendurchmesser (d₅₀) von maximal 25 nm auf. Besonders gute Ergebnisse insbesondere bezüglich der elektrischen Leitfähigkeit werden erreicht, wenn die Kohlenstoffnanoröhrchen einen mittleren Außendurchmesser (d₅₀) von 8 bis 25 nm, bevorzugt von 10 bis weniger als 20 nm, besonders bevorzugt von 12 bis 18 nm und ganz besonders bevorzugt von etwa 15 nm aufweisen.

In Weiterbildung des Erfindungsgedankens wird es vorgeschlagen, dass in dem Verfahrensschritt i) Kohlenstoffnanoröhrchen eingesetzt werden, welche eine BET-Oberfläche von mehr als 200 bis 400 m²/g, bevorzugt von 210 bis 300 m²/g und besonders bevorzugt von 220 bis 280 m²/g aufweisen. Solche Kohlenstoffnanoröhrchen in der mikroporösen Schicht enthaltende Gasdiffusionsschichten weisen eine besonders hohe elektrische Leitfähigkeit auf.

Grundsätzlich können im Rahmen der vorliegenden Erfindung einwandige und/oder mehrwandige Kohlenstoffnanoröhrchen eingesetzt werden. Allerdings hat es sich im Rahmen der vorliegenden Erfindung als vorteilhaft erwiesen, in dem Verfahrensschritt i) mehrwandige Kohlenstoffnanoröhrchen einzusetzen, und zwar besonders bevorzugt solche, welche jeweils zwischen 5 und 12 Schichten umfassen. Die Messung der Anzahl der Schichten erfolgt durch TEM. Dabei werden mindestens 3 TEM-Aufnahmen unterschiedlicher Bereiche der Probe erstellt und ausgewertet, wobei für jede TEM-Aufnahme die Schichtanzahl von wenigstens 10 Kohlenstoffnanoröhrchen bestimmt wird und bei den drei TEM-Aufnahmen insgesamt die Schichtanzahl von wenigstens 50 Kohlenstoffnanoröhrchen bestimmt wird. Aus den so bestimmten Einzelwerten wird dann eine Größenverteilung bestimmt und daraus die mittlere Schichtanzahl berechnet.

Prinzipiell ist die vorliegende Erfindung bezüglich der Länge der in der mikroporösen Schicht der Gasdiffusionsschicht enthaltenden Kohlenstoffnanoröhrchen nicht beschränkt. Gute Ergebnisse insbesondere im Hinblick auf eine hohe elektrische Leitfähigkeit werden jedoch insbesondere erhalten, wenn die mikroporöse Schicht Kohlenstoffnanoröhrchen mit einer mittleren Länge von maximal 20 µm und bevorzugt von 1 bis 10 µm enthält bzw. in dem Verfahrensschritt i) Kohlenstoffnanoröhrchen mit einer mittleren Länge von maximal 20 µm und bevorzugt von 1 bis 10 µm eingesetzt werden. Unter mittlerer Länge wird gemäß der vorliegenden Erfindung der Wert der Länge verstanden, den 50% der vorliegenden Kohlenstoffnanoröhrchen unterschreiten, d.h. 50% aller vorliegenden der Kohlenstoffnanoröhrchen weisen eine kleinere Länge als die angegebene mittlere Länge auf.

Gemäß einer weiteren bevorzugten Ausführungsform der vorliegenden Erfindung wird in dem Verfahrensschritt i) eine Mischung dispergiert, welche - bezogen auf den Kohlenstoffanteil der Mischung, also bezogen auf die Summe der Mengen an Ruß und Kohlenstoffnanoröhrchen und ggf. anderen enthaltenden Kohlenstoff - 10 bis 50 Gew.-%, bevorzugt 20 bis 40 Gew.-%, besonders bevorzugt 25 bis 35 Gew.-% und ganz besonders bevorzugt etwa 30 Gew.-% Kohlenstoffnanoröhrchen enthält. Dadurch wird eine hervorragende elektrische Leitfähigkeit bei dennoch akzeptablen Kosten erreicht.

Erfindungsgemäß weisen die zur Herstellung der mikroporösen Schicht der erfindungsgemäßen Gasdiffusionsschicht eingesetzten Rußpartikel eine BET-Oberfläche von maximal 200 m²/g auf. Besonders gute Ergebnisse insbesondere bezüglich einer hohen elektrischen Leitfähigkeit werden erreicht, wenn die Rußpartikel eine BET-Oberfläche von 20 bis 100 m²/g und bevorzugt von 40 bis 80 m²/g aufweisen.

In Weiterbildung des Erfindungsgedankens wird es vorgeschlagen, in dem Verfahrensschritt i) Ruß mit einem mittleren Partikeldurchmesser (d₅₀) von 30 bis 100 nm einzusetzen.

Vorzugsweise enthält die in dem Verfahrensschritt i) eingesetzte Mischung - bezogen auf den Kohlenstoffanteil der Mischung - 50 bis 90 Gew.-%, bevorzugt 60 bis 80 Gew.-% und besonders bevorzugt 65 bis 75 Gew.-% Ruß. Dabei ist es ganz besonders bevorzugt, wenn die in dem Verfahrensschritt i) eingesetzte Mischung keinen weiteren Kohlenstoff als den Ruß und die Kohlenstoffnanoröhrchen enthält, also die Mischung - bezogen auf den Kohlenstoffanteil der Mischung - aus 50 bis 90 Gew.-% Ruß und 10 bis 50 Gew.-% Kohlenstoffnanoröhrchen besteht, bevorzugt aus 60 bis 80 Gew.-% Ruß und 20 bis 40 Gew.-% Kohlenstoffnanoröhrchen besteht und besonders bevorzugt aus 65 bis 75 Gew.-% Ruß und 25 bis 35 Gew.-% Kohlenstoffnanoröhrchen besteht.

Gemäß der vorliegenden Erfindung wird in dem Verfahrensschritt i) eine Mischung dispergiert, in der die Summe der Mengen an Ruß und Kohlenstoffnanoröhrchen bezogen auf die Gesamtmenge der Mischung 1 bis 15 Gew.-%, bevorzugt 2 bis 12 Gew.-% und besonders bevorzugt 4 bis 8 Gew.-% beträgt. Wie vorstehend dargelegt enthält die in dem Verfahrensschritt i) eingesetzte Mischung keinen weiteren Kohlenstoff als den Ruß und die Kohlenstoffnanoröhrchen, so dass somit besonders bevorzugt der Kohlenstoffanteil der Mischung bezogen auf die Gesamtmenge der Mischung vorzugsweise 1 bis 15 Gew.-%, besonders bevorzugt 2 bis 12 Gew.-% und ganz besonders bevorzugt 4 bis 8 Gew.-% beträgt.

Grundsätzlich können als Dispersionsmedium alle flüssigen, zur Dispersion von Ruß und Kohlenstoffnanoröhrchen geeigneten Flüssigkeiten, welche weder den Ruß noch die Kohlenstoffnanoröhrchen lösen und/oder zersetzen, eingesetzt werden. Lediglich beispielsweise seine Alkohole, wie Methanol, Ethanol, Propanol, Butanol, Pentanol und dergleichen, Wasser oder Mischungen aus Wasser und Alkohol(en) genannt, wobei Wasser als Dispersionsmedium besonders bevorzugt ist.

Prinzipiell ist die vorliegende Erfindung bezüglich der Menge des in dem Verfahrensschritt i) eingesetzten Dispersionsmediums nicht beschränkt. Gute Ergebnisse werden insbesondere erhalten, wenn die Menge des in dem Verfahrensschritt i) eingesetzten Dispersionsmediums, insbesondere Wassers, bezogen auf die Gesamtmenge der Mischung 50 bis 98 Gew.-%, bevorzugt 85 bis 95 Gew.-%, besonders bevorzugt 87 bis 94 Gew.-% und ganz besonders bevorzugt etwa 89 Gew.-% beträgt.

Um die mikroporöse Schicht der erfindungsgemäßen Gasdiffusionsschicht hydrophob auszugestalten, insbesondere um ein Fluten der mikroporösen Schicht mit Wasser bei der Verwendung der erfindungsgemäßen Gasdiffusionsschicht beispielsweise in einer PEM-Brennstoffzelle zuverlässig zu verhindern, wird es in Weiterbildung des Erfindungsgedankens vorgeschlagen, dass die in dem Verfahrensschritt ii) auf das Substrat aufgebrachte Mischung ferner ein Bindemittel enthält. Dabei kann das Bindemittel in der in dem Verfahrensschritt i) eingesetzten Mischung, also bereits vor dem Anlegen der Schergeschwindigkeit, enthalten sein oder der in dem Schritt i) dispergierten Mischung, also der Mischung nach dem Dispergieren - d.h nach dem Anlegen der Schergeschwindigkeit -, aber vor dem Durchführen des Verfahrensschritts ii) zugegeben werden. Grundsätzlich können als Bindemittel alle hydrophoben Substanzen eingesetzt werden, welche mit Ruß und Kohlenstoffnanoröhrchen kompatibel sind. Gute Ergebnisse werden beispielsweise mit Fluorpolymeren und insbesondere mit Perfluorpolymeren erhalten. Ganz besonders bevorzugt wird als Bindemittel Polytetrafluorethylen eingesetzt.

Grundsätzlich ist die vorliegende Erfindung bezüglich der Menge des in dem Verfahrensschritt i) eingesetzten Bindemittels nicht beschränkt. Gute Ergebnisse werden insbesondere erhalten, wenn die Menge des in dem Verfahrensschritt i) eingesetzten Bindemittels, insbesondere Polytetrafluorethylen, bezogen auf die Gesamtmenge der Mischung 0,1 bis 10 Gew.-%, bevorzugt 0,5 bis 5 Gew.-%, besonders bevorzugt 1 bis 3,5 Gew.-% und ganz besonders bevorzugt etwa 1,3 Gew.-% beträgt.

Zusätzlich zu dem Ruß, den Kohlenstoffnanoröhrchen, dem Dispersionsmedium und dem optionalen Bindemittel kann die in dem Verfahrensschritt ii) auf das Substrat aufgebrachte Mischung ein oder mehrere Filmbildner enthalten. Hierzu kann die in dem Verfahrensschritt eingesetzte Mischung, d.h. die vor dem Anlegen der Schergeschwindigkeit vorliegende Mischung, ein oder mehrere Filmbildner enthalten. Alternativ dazu können der bereits dispergierten Mischung, also der Mischung nach dem Dispergieren - d.h nach dem Anlegen der Schergeschwindigkeit -, aber vor dem Durchführen des Verfahrensschritts ii), ein oder mehrere Filmbildner zugegeben werden. Als Filmbildner eignen sich insbesondere Polyalkylenglykole, wie Polyethylenglykole, beispielsweise Polyethylenglykol 400. Zusätzlich zu dem Filmbildner oder alternativ dazu kann die in dem Verfahrensschritt ii) auf das Substrat aufgebrachte Mischung ein oder mehrere Viskositätseinsteller, d.h. in der in dem Verfahrensschritt i) eingesetzten Mischung können ein oder mehrere Viskositätseinsteller enthalten sein oder der bereits dispergierten Mischung können vor dem Durchführen des Verfahrensschritts ii) ein oder mehrere Viskositätseinsteller zugegeben werden. Als Viskositätseinsteller eignen sich insbesondere Polysaccharide und bevorzugt Cellulose oder Cellulosederivate. Gute Ergebnisse werden diesbezüglich insbesondere erhalten, wenn die in dem Verfahrensschritt ii) auf das Substrat aufgebrachte Mischung als Viskositätseinsteller Hyroxypropylcellulose enthält.

Gemäß einer bevorzugten Ausführungsform der vorliegenden Erfindung besteht die in dem Verfahrensschritt ii) aufgebrachte Mischung aus:
- 1 bis 15 Gew.-% an Summe von Ruß und Kohlenstoffnanoröhrchen, wobei der Ruß eine BET-Oberfläche von maximal 200 m²/g aufweist, die Kohlenstoffnanoröhrchen eine BET-Oberfläche von wenigstens 200 m²/g sowie einen mittleren Außendurchmesser (d₅₀) von maximal 25 nm aufweisen, die Menge an Kohlenstoffnanoröhrchen bezogen auf den Kohlenstoffanteil der Mischung 10 bis 50 Gew.-% beträgt und der Rest auf 100 Gew.-% des Kohlenstoffanteils Ruß ist,
- 50 bis 98 Gew.-% Dispersionsmedium,
- 0,1 bis 10 Gew.-% Bindemittel,
- 0 bis 5 Gew.-% Filmbildner und
- 0 bis 5 Gew.-% Hyroxypropylcellulose als Viskositätseinsteller.

Besonders bevorzugt besteht die in dem Verfahrensschritt ii) aufgebrachte Mischung aus:
- 1 bis 12 Gew.-% an Summe von Ruß und Kohlenstoffnanoröhrchen, wobei der Ruß eine BET-Oberfläche von maximal 200 m²/g aufweist, die Kohlenstoffnanoröhrchen eine BET-Oberfläche von wenigstens 200 m²/g sowie einen mittleren Außendurchmesser (d₅₀) von maximal 25 nm aufweisen, die Menge an Kohlenstoffnanoröhrchen bezogen auf den Kohlenstoffanteil der Mischung 20 bis 40 Gew.-% beträgt und der Rest auf 100 Gew.-% des Kohlenstoffanteils Ruß ist,
- 85 bis 95 Gew.-% Dispersionsmedium,
- 0,5 bis 5 Gew.-% Bindemittel,
- 1 bis 4 Gew.-% Filmbildner und
- 0,5 bis 2,5 Gew.-% Hyroxypropylcellulose als Viskositätseinsteller.

Ganz besonders bevorzugt besteht die in dem Verfahrensschritt ii) aufgebrachte Mischung aus:
- 4 bis 8 Gew.-% an Summe von Ruß und Kohlenstoffnanoröhrchen, wobei der Ruß eine BET-Oberfläche von 20 bis 100 m²/g aufweist, die Kohlenstoffnanoröhrchen eine BET-Oberfläche von 210 bis 300 m²/g sowie einen mittleren Außendurchmesser (d₅₀) von 10 bis weniger als 20 nm aufweisen, die Menge an Kohlenstoffnanoröhrchen bezogen auf den Kohlenstoffanteil der Mischung 25 bis 35 Gew.-% beträgt und der Rest auf 100 Gew.-% des Kohlenstoffanteils Ruß ist,
- 87 bis 94 Gew.-% Wasser als Dispersionsmedium,
- 1 bis 3 Gew.-% Polytetrafluorethylen als Bindemittel,
- 1 bis 4 Gew.-% Polyethylenglykol als Filmbildner und
- 0,5 bis 2 Gew.-% Hyroxypropylcellulose als Viskositätseinsteller.

Die Summe der Bestandteile der drei vorgenannten Mischungen beträgt selbstverständlich jeweils 100 Gew.-%.

Wie vorstehend im Detail dargelegt, ist es ein wesentliches Merkmal der vorliegenden Erfindung, dass die erfindungsgemäße Gasdiffusionsschicht durch ein Verfahren erhältlich ist, bei dem die mikroporöse Schicht auf dem Substrat aus kohlenstoffhaltigem Material ausgebildet wird durch Aufbringen und Trocknen einer Ruß, Kohlenstoffnanoröhrchen sowie Dispersionsmedium enthaltenden Mischung, welche vor dem Aufbringen mit einer Schergeschwindigkeit von wenigstens 1.000 Sekunden⁻¹ dispergiert worden ist und so dispergiert worden ist, dass in der hergestellten Dispersion wenigstens 90 % aller Kohlenstoffnanoröhrchen eine mittlere Agglomeratgröße von maximal 25 µm aufweisen. Durch diese Paralleldispergierung von Ruß und Kohlenstoffnanoröhrchen wird überraschenderweise eine eine mikroporöse Schicht umfassende Gasdiffusionsschicht mit einer höheren elektrischen Leitfähigkeit und einer höheren Gasdurchlässigkeit erhalten als mit einem entsprechenden, mit den gleichen Ausgangsmaterialien durchgeführten Verfahren, bei dem anstelle der Paralleldispergierung getrennt voneinander erstens eine Dispersion von Ruß in Dispersionsmedium und zweitens eine Dispersion von Kohlenstoffnanoröhrchen in Dispersionsmedium hergestellt werden, bevor diese beiden Dispersionen ohne Homogenisierung - d.h. ohne Anwendung hoher Scherkräfte - miteinander vermengt werden, oder bei dem erst eine Dispersion von Kohlenstoffnanoröhrchen in Dispersionsmedium hergestellt wird und anschließend dieser Dispersion Ruß ohne weitere Homogenisierung - d.h. ohne Anwendung hoher Scherkräfte - zugegeben wird. Besonders gute Ergebnisse werden dabei insbesondere erhalten, wenn die Mischung in dem Verfahrensschritt i) mit einer Schergeschwindigkeit von wenigstens 2.000 Sekunden⁻¹ und bevorzugt von wenigstens 5.000 Sekunden⁻¹ dispergiert wird.

Gleichermaßen ist es bevorzugt, dass die Mischung in dem Verfahrensschritt i) so dispergiert wird, dass in der hergestellten Dispersion wenigstens 90 % aller darin enthaltenen Kohlenstoffnanoröhrchen eine mittlere Agglomeratgröße von 0,5 bis weniger als 20 µm und bevorzugt von 0,5 bis weniger als 15 µm aufweisen. Insbesondere bevorzugt wird die Mischung in dem Verfahrensschritt i) so dispergiert, dass in der hergestellten Dispersion wenigstens 95 % aller darin enthaltenen Kohlenstoffnanoröhrchen eine mittlere Agglomeratgröße von 0,5 bis weniger als 20 µm und bevorzugt von 0,5 bis weniger als 15 µm aufweisen. Ganz besonders bevorzugt wird die Mischung in dem Verfahrensschritt i) so dispergiert, dass in der hergestellten Dispersion alle darin enthaltenen Kohlenstoffnanoröhrchen eine mittlere Agglomeratgröße von 0,5 bis weniger als 20 µm und bevorzugt von 0,5 bis weniger als 15 µm aufweisen.

Für eine Dispergierung der vorgenannten Mischung mit einer Schergeschwindigkeit von wenigstens 1.000 Sekunden⁻¹ und/oder so, dass in der hergestellten Dispersion wenigstens 90 % aller Kohlenstoffnanoröhrchen eine Agglomeratgröße von maximal 25 µm aufweisen, geeignete Vorrichtungen sind beispielsweise Kugelmühlen, Perlmühlen, Sandmühlen, Kneter, Walzenstühle, statische Mischer, Ultraschalldispergierer, Vorrichtungen, welche durch hohe Drücke, hohe Beschleunigungen und/oder hohen Prall Scherkräfte einbringen, sowie beliebige Kombinationen von zwei oder mehr der vorgenannten Vorrichtungen.

Dabei kann die in dem Verfahrensschritt i) eingesetzte, d.h. zu dispergierende Mischung, auf verschieden Arten hergestellt werden. Zum einen können zunächst die Kohlenstoffnanoröhrchen in dem Dispersionsmedium beispielsweise unter Anlegen einer Schergeschwindigkeit von wenigstens 1.000 Sekunden⁻¹ dispergiert werden, bevor dieser Dispersion Ruß zugegeben wird und die so erhaltene Mischung mit einer Schergeschwindigkeit von wenigstens 1.000 Sekunden⁻¹ dispergiert wird und so dispergiert wird, dass in der hergestellten Dispersion wenigstens 90 % aller Kohlenstoffnanoröhrchen eine Agglomeratgröße von maximal 25 µm aufweisen. Alternativ dazu können zunächst die Kohlenstoffnanoröhrchen in das Dispersionsmedium ohne Anlegen einer nennenswerten Schergeschwindigkeit eingerührt werden, bevor dieser Mischung Ruß zugegeben wird und die so erhaltene Mischung mit einer Schergeschwindigkeit von wenigstens 1.000 Sekunden⁻¹ dispergiert wird und so dispergiert wird, dass in der hergestellten Dispersion wenigstens 90 % aller Kohlenstoffnanoröhrchen eine Agglomeratgröße von maximal 25 µm aufweisen. Alternativ dazu kann zunächst der Ruß in das Dispersionsmedium ohne Anlegen einer nennenswerten Scherkraft eingerührt werden, bevor dieser Mischung die Kohlenstoffnanoröhrchen zugegeben werden und die so erhaltene Mischung mit einer Schergeschwindigkeit von wenigstens 1.000 Sekunden⁻¹ dispergiert wird und so dispergiert wird, dass in der hergestellten Dispersion wenigstens 90 % aller Kohlenstoffnanoröhrchen eine Agglomeratgröße von maximal 25 µm aufweisen. Die vorstehend genannten Additive, d.h. Bindemittel, Filmbildner und/oder Viskositätseinsteller, können jeweils den bereits dispergierten Mischungen oder einzelnen Komponenten der Mischung bereits vor der Dispergierung zugegeben werden.

In dem Verfahrensschritt ii) kann die in dem Verfahrensschritt i) hergestellte Dispersion auf jede dem Fachmann bekannte Weise auf das Substrat aufgebracht werden. Lediglich beispielsweise seien in diesem Zusammenhang Techniken, wie Sprühen, Tauchen, Bestreichen, Rollen, Pinseln oder Siebdruck genannt.

Durch das in dem Verfahrensschritt iii) durchgeführte Trocknen wird die Dispersion an die Substratoberfläche angehaftet und zugleich wird das Dispersionsmedium zumindest teilweise entfernt. Vorzugsweise wird das Trocknen in dem Verfahrensschritt iii) bei einer Temperatur von 40 bis 150°C, besonders bevorzugt von 50 bis 130°C, ganz besonders bevorzugt von 60 bis 100°C und höchst bevorzugt von 70 bis 90°C, wie beispielsweise bei 80°C, durchgeführt. Die Trocknung erfolgt dabei so lange, bis das Dispersionsmedium in einem ausreichend hohen Umfang entfernt worden ist, und zwar vorzugsweise für 5 Minuten bis 2 Stunden und besonders bevorzugt für 10 bis 30 Minuten.

In Weiterbildung des Erfindungsgedankens wird es vorgeschlagen, die getrocknete Gasdiffusionsschicht in einem nachfolgenden Schritt iv) zu sintern, wobei das Sintern vorzugsweise bei einer Temperatur von mehr als 150°C für 1 bis 60 Minuten durchgeführt wird. Besonders gute Ergebnisse werden dabei erhalten, wenn das Sintern bei einer Temperatur von 200 bis 500°C für 2 bis 30 Minuten und insbesondere bei einer Temperatur von 325 bis 375°C, wie beispielsweise bei etwa 350°C, für 5 bis 20 Minuten, wie beispielsweise für 10 Minuten, durchgeführt wird.

Bei dem Sintern werden in der dispergierten Mischung enthaltene Additive, wie Filmbildner, insbesondere Polyethylenglykol, und Viskositätseinsteller, insbesondere Hydroxypropylcellulose, zumindest annähernd vollständig zersetzt, so dass nach dem Sintern eine den Ruß, die Kohlenstoffnanoröhrchen und das optionale Bindemittel enthaltende mikroporöse Schicht zurückbleibt. Gemäß einer bevorzugten Ausführungsform der vorliegenden Erfindung enthält die getrocknete und ggf. gesinterte mikroporöse Schicht der erfindungsgemäßen Gasdiffusionsschicht 50 bis 99,9 Gew.-% an Summe von Ruß mit der vorstehend genannten BET-Oberfläche und Kohlenstoffnanoröhrchen mit der vorgenannten BET-Oberfläche und dem vorgenannten mittleren Außendurchmesser sowie Rest auf 100 Gew.-% Bindemittel, wobei Menge an Kohlenstoffnanoröhrchen bezogen auf den Kohlenstoffanteil der mikroporösen Schicht 10 bis 50 Gew.-% beträgt. Besonders bevorzugt enthält die getrocknete und ggf. gesinterte mikroporöse Schicht der erfindungsgemäßen Gasdiffusionsschicht 70 bis 99 Gew.-% an Summe von Ruß mit der vorstehend genannten BET-Oberfläche und Kohlenstoffnanoröhrchen mit der vorgenannten BET-Oberfläche und dem vorgenannten mittleren Außendurchmesser sowie Rest auf 100 Gew.-% Bindemittel, wobei Menge an Kohlenstoffnanoröhrchen bezogen auf den Kohlenstoffanteil der mikroporösen Schicht 20 bis 40 Gew.-% beträgt. Ganz besonders bevorzugt enthält die getrocknete und ggf. gesinterte mikroporöse Schicht der erfindungsgemäßen Gasdiffusionsschicht 75 bis 95 Gew.-% und höchst bevorzugt 77 bis 90 Gew.-% an Summe von Ruß mit der vorstehend genannten BET-Oberfläche und Kohlenstoffnanoröhrchen mit der vorgenannten BET-Oberfläche und dem vorgenannten mittleren Außendurchmesser sowie Rest auf 100 Gew.-% Bindemittel, wobei Menge an Kohlenstoffnanoröhrchen bezogen auf den Kohlenstoffanteil der mikroporösen Schicht 25 bis 35 Gew.-% beträgt.

In Weiterbildung des Erfindungsgedankens wird es vorgeschlagen, dass die getrocknete und ggf. gesinterte mikroporöse Schicht der erfindungsgemäßen Gasdiffusionsschicht eine durch Quecksilberporosimetrie gemäß der DIN 66133 gemessene Porosität von 30 bis 50% und bevorzugt von 35 bis 45% aufweist.

Ferner ist es bevorzugt, dass die getrocknete und ggf. gesinterte mikroporöse Schicht der erfindungsgemäßen Gasdiffusionsschicht einen mittleren Porendurchmesser (d₅₀) von 0,05 bis 1 µm und bevorzugt von 0,25 bis 0,5 µm aufweist.

Als Substrat aus kohlenstoffhaltigem Material können alle herkömmlicherweise als Substrat für eine Gasdiffusionsschicht eingesetzten porösen kohlenstoffhaltigen Materialien verwendet werden. Gute Ergebnisse werden dabei insbesondere erhalten, wenn das Substrat aus der Gruppe ausgewählt ist, welche aus Carbonfaservliesen, Carbonfaserpapieren, Carbonfasergeweben und beliebigen Mischungen hiervon besteht.

Gemäß einer weiteren bevorzugten Ausführungsform der vorliegenden Erfindung ist das Substrat zumindest teilweise mit einer hydrophoben Substanz beschichtet oder bevorzugt imprägniert, um das Substrat hydrophob auszugestalten. Als hydrophobe Substanz sind hierbei insbesondere Fluorpolymere und besonders bevorzugt Perfluorpolymere, wie insbesondere Polytetrafluorethylen, geeignet. Besonders gute Ergebnisse werden beispielsweise erhalten, wenn das Substrat, wie beispielsweise Carbonfaservlies, mit Polytetrafluorethylen - beispielsweise mit einer Beladung von 5 Gew.-% - imprägniert ist.

In Weiterbildung des Erfindungsgedankens wird es vorgeschlagen, dass die Gasdiffusionsschicht bei einer Kompression von 100 N/cm² einen elektrischen Widerstand von weniger als 8 Ω·cm², bevorzugt von weniger als 7 Ω·cm² und besonders bevorzugt von weniger als 6 Ω·cm² aufweist.

Ferner ist es bevorzugt, dass die Gasdiffusionsschicht eine gemäß der DIN ISO 5636/5, ASTM D-726-58 gemessene Gurley-Gasdurchlässigkeit von mehr als 2 cm³/cm²/s, bevorzugt von mehr als 3 cm³/cm²/s und besonders bevorzugt von mehr als 4 cm³/cm²/s aufweist.

Ein weiterer Gegenstand der vorliegenden Erfindung ist eine Gasdiffusionsschicht, welche ein Substrat aus kohlenstoffhaltigem Material sowie eine mikroporöse Schicht umfasst, wobei:
a) die mikroporöse Schicht aus 50 bis 99,9 Gew.-%, bevorzugt 70 bis 99 Gew.-%, besonders bevorzugt 75 bis 95 Gew.-% und ganz besonders bevorzugt 77 bis 90 Gew.-% an Summe von Ruß sowie Kohlenstoffnanoröhrchen sowie Rest auf 100 Gew.-% Bindemittel zusammengesetzt ist, wobei der Ruß eine BET-Oberfläche von maximal 200 m²/g aufweist, die Kohlenstoffnanoröhrchen eine BET-Oberfläche von wenigstens 200 m²/g sowie einen mittleren Außendurchmesser (d₅₀) von maximal 25 nm aufweisen und die Menge an Kohlenstoffnanoröhrchen bezogen auf den Kohlenstoffanteil der mikroporösen Schicht 10 bis 50 Gew.-%, bevorzugt 20 bis 40 Gew.-% und besonders bevorzugt 25 bis 35 Gew.-% beträgt,
b) die Gasdiffusionsschicht bei einer Kompression von 100 N/cm² einen elektrischen Widerstand von weniger als 8 Ω·cm² aufweist und
c) die Gasdiffusionsschicht eine Gurley-Gasdurchlässigkeit von mehr als 2 cm³/cm²/s aufweist.

Vorzugsweise beträgt der elektrische Widerstand der Gasdiffusionsschicht bei einer Kompression von 100 N/cm² weniger als 7 Ω·cm² und besonders bevorzugt weniger als 6 Ω·cm².

Zudem ist es bevorzugt, dass die Gurley-Gasdurchlässigkeit der Gasdiffusionsschicht mehr als 3 cm³/cm²/s und besonders bevorzugt mehr als 4 cm³/cm²/s beträgt.

Ferner ist es bevorzugt, dass das Bindemittel Polytetrafluorethylen ist.

Ferner betrifft die vorliegende Erfindung eine Gasdiffusionselektrode, welche eine zuvor beschriebene Gasdiffusionsschicht umfasst, wobei auf der mikroporösen Schicht eine Katalysatorschicht angeordnet ist. Die Katalysatorschicht kann beispielsweise eine Metallschicht, insbesondere Edelmetallschicht, wie Platinschicht, sein oder diese kann aus auf einem Träger, wie Kohlenstoffpartikeln, getragenen Metallpartikeln, insbesondere Edelmetallpartikeln, wie Platinpartikeln, bestehen.

Ein weiterer Gegenstand der vorliegenden Erfindung ist ein Verfahren zur Herstellung einer zuvor beschriebenen Gasdiffusionsschicht, welches die nachfolgenden Schritte umfasst:
i) Dispergieren einer Ruß mit einer BET-Oberfläche von maximal 200 m²/g, Kohlenstoffnanoröhrchen mit einer BET-Oberfläche von wenigstens 200 m²/g sowie mit einem mittleren Außendurchmesser (d₅₀) von maximal 25 nm und Dispersionsmedium enthaltenden Mischung mit einer Schergeschwindigkeit von wenigstens 1.000 Sekunden⁻¹ und/oder so, dass in der hergestellten Dispersion wenigstens 90 % aller Kohlenstoffnanoröhrchen eine mittlere Agglomeratgröße von maximal 25 µm aufweisen,
ii) Aufbringen der in dem Schritt i) hergestellten Dispersion auf wenigstens ein Teilstück von wenigstens einer Seite des Substrats und
iii) Trocknen der in dem Schritt ii) aufgetragenen Dispersion bei einer Temperatur von 40 bis 150°C und
iv) ggf. Sintern der getrockneten Gasdiffusionsschicht bei einer Temperatur von mehr als 150°C.

Ferner betrifft die vorliegende Erfindung die Verwendung einer zuvor beschriebenen Gasdiffusionsschicht oder einer zuvor beschriebenen Gasdiffusionselektrode in einer Brennstoffzelle, in einer Elektrolysezelle oder in einer Batterie, und zwar bevorzugt in einer Poyelektrolytmembran-Brennstoffzelle, in einer Direkt-Methanol-Brennstoffzelle, in einer Zink-Luft-Batterie oder in einer Lithium-Schwefel-Batterie.

Nachfolgend wird die vorliegende Erfindung rein beispielhaft anhand eines die Erfindung erläuternden, diese aber nicht beschränkenden Beispiels beschrieben.

### Beispiel

10 g Kohlenstoffnanoröhrchen mit einer BET-Oberfläche von 263 m²/g sowie einem mittleren Außendurchmesser (d₅₀) von 15 nm und 30 g Ruß mit einer BET-Oberfläche von 62 m²/g (Super P der Firma Timcal Graphite & Carbon's, USA) wurden in 490 g Wasser für 10 Minuten mit einer Schergeschwindigkeit von 5000 Sekunden⁻¹ dispergiert. Etwa 90 % aller der in der so hergestellten Dispersion vorliegenden Kohlenstoffnanoröhrchen wiesen eine mittlere Agglomeratgröße von maximal 20 µm auf. Diese Dispersion (530 g) wurde mit weiteren 150 g Wasser, 20 g Polyethylenglykol 400, 9 g Hydroxypropylcellulose und 16 g Polytetrafluorethylen-Dispersion mit einem Polytetrafluorethylengehalt von 59 Gew.-% (Dyneon T5050 der Firma 3M) versetzt und 15 Minuten lang mit einem Flügelrührwerk mit einer Drehzahl von weniger als 200 UpM homogenisiert.

Die so hergestellte Dispersion wurde mit einem Laborrakel auf ein mit 5 Gew.-% Polytetrafluorethylen imprägniertes Carbonfaserpapier (Sigracet GDL 25BA der Firma SGL Carbon GmbH) in einer Menge von etwa 16 g/m² aufgebracht und anschließend für 10 Minuten bei 80°C getrocknet. Anschließend wurde die getrocknete Gasdiffusionsschicht für 10 Minuten bei 350°C gesintert.

Es wurde eine Gasdiffusionsschicht erhalten, welche einen bei einer Kompression von 100 N/cm² gemessenen einen elektrischen Widerstand von 6,1 Ω·cm² und eine mit dem Gurley-Verfahren bestimmte Gasdurchlässigkeit von 5,9 cm³/cm²/s aufwies. Dieses Gasdiffusionsmedium wies ein spezifisches Porenvolumen von 3.5 cm³/g, eine Porosität von 39.7% und einen häufigsten Porendurchmesser von 0.35 µm auf.

## Patentansprüche

1. Gasdiffusionsschicht, welche ein Substrat aus kohlenstoffhaltigem Material sowie eine mikroporöse Schicht umfasst, wobei die Gasdiffusionsschicht durch ein Verfahren erhältlich ist, welches die nachfolgenden Schritte umfasst:
i) Dispergieren von Ruß mit einer BET-Oberfläche von maximal 200 m²/g, Kohlenstoffnanoröhrchen mit einer BET-Oberfläche von wenigstens 200 m²/g sowie mit einem mittleren Außendurchmesser (d₅₀) von maximal 25 nm und Dispersionsmedium enthaltenden Mischung mit einer Schergeschwindigkeit von wenigstens 1.000 Sekunden⁻¹ und so, dass in der hergestellten Dispersion wenigstens 90 % aller Kohlenstoffnanoröhrchen eine mittlere Agglomeratgröße von maximal 25 µm aufweisen, wobei die Summe der Mengen an Ruß und Kohlenstoffnanoröhrchen bezogen auf die Gesamtmenge der Mischung 1 bis 15 Gew.-% beträgt,
ii) Aufbringen der in dem Schritt i) hergestellten Dispersion auf wenigstens ein Teilstück von wenigstens einer Seite des Substrats und
iii) Trocknen der in dem Schritt ii) aufgetragenen Dispersion.

2. Gasdiffusionsschicht nach Anspruch 1,
**dadurch gekennzeichnet, dass** in dem Schritt i) Kohlenstoffnanoröhrchen mit einem mittleren Außendurchmesser (d₅₀) von 8 bis 25 nm, bevorzugt von 10 bis weniger als 20 nm und besonders bevorzugt von 12 bis 18 nm eingesetzt werden.

3. Gasdiffusionsschicht nach Anspruch 1 oder 2,
**dadurch gekennzeichnet, dass** in dem Schritt i) Kohlenstoffnanoröhrchen mit einer BET-Oberfläche von mehr als 200 bis 400 m²/g, bevorzugt von 210 bis 300 m²/g und besonders bevorzugt von 220 bis 280 m²/g eingesetzt werden.

4. Gasdiffusionsschicht nach zumindest einem der vorstehenden Ansprüche,
**dadurch gekennzeichnet, dass** die in dem Schritt i) eingesetzte Mischung bezogen auf den Kohlenstoffanteil der Mischung 10 bis 50 Gew.-%, bevorzugt 20 bis 40 Gew.-% und besonders bevorzugt 25 bis 35 Gew.-% Kohlenstoffnanoröhrchen enthält.

5. Gasdiffusionsschicht nach zumindest einem der vorstehenden Ansprüche,
**dadurch gekennzeichnet , dass** in dem Schritt i) Ruß mit einer BET-Oberfläche von 20 bis 100 m²/g und bevorzugt von 40 bis 80 m²/g eingesetzt wird.

6. Gasdiffusionsschicht nach zumindest einem der vorstehenden Ansprüche,
**dadurch gekennzeichnet, dass** die in dem Schritt i) eingesetzte Mischung als Dispersionsmedium Wasser enthält, wobei die Menge des Dispersionsmediums bezogen auf die Gesamtmenge der Mischung 50 bis 98 Gew.-%, bevorzugt 85 bis 95 Gew.-% und besonders bevorzugt 87 bis 94 Gew.-% beträgt.

7. Gasdiffusionsschicht nach zumindest einem der vorstehenden Ansprüche,
**dadurch gekennzeichnet, dass** die in dem Schritt ii) aufgebrachte Mischung besteht aus:
- 1 bis 15 Gew.-%, bevorzugt 2 bis 12 Gew.-% und besonders bevorzugt 4 bis 7 Gew.-% an Summe von Ruß und Kohlenstoffnanoröhrchen, wobei der Ruß eine BET-Oberfläche von maximal 200 m²/g aufweist, die Kohlenstoffnanoröhrchen eine BET-Oberfläche von wenigstens 200 m²/g sowie einen mittleren Außendurchmesser (dso) von maximal 25 nm aufweisen, die Menge an Kohlenstoffnanoröhrchen bezogen auf den Kohlenstoffanteil der Mischung 10 bis 50 Gew.-%, bevorzugt 20 bis 40 Gew.-% und besonders bevorzugt 25 bis 35 Gew.-% beträgt und der Rest auf 100 Gew.-% des Kohlenstoffanteils Ruß ist,
- 50 bis 98 Gew.-%, bevorzugt 85 bis 95 Gew.-% und besonders bevorzugt 87 bis 94 Gew.-% Wasser als Dispersionsmedium,
- 0,1 bis 10 Gew.-%, bevorzugt 0,5 bis 5 Gew.-% und besonders bevorzugt 1 bis 3 Gew.-% Polytetrafluorethylen als Bindemittel,
- 0 bis 5 Gew.-% und bevorzugt 1 bis 4 Gew.-% Polyethylenglykol als Filmbildner und
- 0 bis 5 Gew.-% und bevorzugt 0,5 bis 2 Gew.-% Hyroxypropylcellulose als Viskositätseinsteller.

8. Gasdiffusionsschicht nach zumindest einem der vorstehenden Ansprüche,
**dadurch gekennzeichnet, dass** die Mischung in dem Schritt i) mit einer Schergeschwindigkeit von wenigstens 2.000 Sekunden⁻¹ und bevorzugt von wenigstens 5.000 Sekunden⁻¹ dispergiert wird.

9. Gasdiffusionsschicht nach zumindest einem der vorstehenden Ansprüche,
**dadurch gekennzeichnet , dass** die Mischung in dem Schritt i) so dispergiert wird, dass in der hergestellten Dispersion wenigstens 90 % aller, bevorzugt wenigstens 95 % aller und besonders bevorzugt alle Kohlenstoffnanoröhrchen eine mittlere Agglomeratgröße von 0,5 bis weniger als 20 µm und bevorzugt von 0,5 bis weniger als 15 µm aufweisen.

10. Gasdiffusionsschicht nach zumindest einem der vorstehenden Ansprüche,
**dadurch gekennzeichnet, dass** das Dispergieren in dem Schritt ii) in einer Kugelmühle, in einer Perlmühle, in einer Sandmühle, in einem Kneter, in einem Walzenstuhl, in einem statische Mischer, in einem Ultraschalldispergierer, in einer Vorrichtung, welche durch hohe Drücke, hohe Beschleunigungen und/oder hohen Prall Scherkräfte einbringt, oder einer beliebige Kombination von zwei oder mehr der vorgenannten Vorrichtungen durchgeführt wird.

11. Gasdiffusionsschicht nach zumindest einem der vorstehenden Ansprüche,
**dadurch gekennzeichnet, dass** diese bei einer Kompression von 100 N/cm² einen elektrischen Widerstand von weniger als 8 Ω·cm², bevorzugt von weniger als 7 Ω·cm² und besonders bevorzugt von weniger als 6 Ω·cm² aufweist.

12. Gasdiffusionsschicht nach zumindest einem der vorstehenden Ansprüche, welche ein Substrat aus kohlenstoffhaltigem Material sowie eine mikroporöse Schicht umfasst, wobei:
a) die mikroporöse Schicht aus 50 bis 99,9 Gew.-%, bevorzugt 70 bis 99 Gew.-%, besonders bevorzugt 75 bis 95 Gew.-% und ganz besonders bevorzugt 77 bis 90 Gew.-% an Summe von Ruß sowie Kohlenstoffnanoröhrchen sowie Rest auf 100 Gew.-% Bindemittel zusammengesetzt ist, wobei der Ruß eine BET-Oberfläche von maximal 200 m²/g aufweist, die Kohlenstoffnanoröhrchen eine BET-Oberfläche von wenigstens 200 m²/g sowie einen mittleren Außendurchmesser (d₅₀) von maximal 25 nm aufweisen und die Menge an Kohlenstoffnanoröhrchen bezogen auf den Kohlenstoffanteil der mikroporösen Schicht 10 bis 50 Gew.-%, bevorzugt 20 bis 40 Gew.-% und besonders bevorzugt 25 bis 35 Gew.-% beträgt,
b) die Gasdiffusionsschicht bei einer Kompression von 100 N/cm² einen elektrischen Widerstand von weniger als 8 Ω·cm² aufweist und
c) die Gasdiffusionsschicht eine Gurley-Gasdurchlässigkeit von mehr als 2 cm³/cm²/s aufweist.

13. Gasdiffusionselektrode umfassend eine Gasdiffusionsschicht nach zumindest einem der vorstehenden Ansprüche, wobei auf der mikroporösen Schicht eine Katalysatorschicht angeordnet ist.

14. Verfahren zur Herstellung einer Gasdiffusionsschicht nach zumindest einem der Ansprüche 1 bis 12, welches die nachfolgenden Schritte umfasst:
i) Dispergieren von Ruß mit einer BET-Oberfläche von maximal 200 m²/g, Kohlenstoffnanoröhrchen mit einer BET-Oberfläche von wenigstens 200 m²/g sowie mit einem mittleren Außendurchmesser (d₅₀) von maximal 25 nm und Dispersionsmedium enthaltenden Mischung mit einer Schergeschwindigkeit von wenigstens 1.000 Sekunden⁻¹ und so, dass in der hergestellten Dispersion wenigstens 90 % aller Kohlenstoffnanoröhrchen eine mittlere Agglomeratgröße von maximal 25 µm aufweisen,
ii) Aufbringen der in dem Schritt i) hergestellten Dispersion auf wenigstens ein Teilstück von wenigstens einer Seite des Substrats und
iii) Trocknen der in dem Schritt ii) aufgetragenen Dispersion bei einer Temperatur von 40 bis 150°C und
iv) ggf. Sintern der getrockneten Gasdiffusionsschicht bei einer Temperatur von mehr als 150°C.

15. Verwendung einer Gasdiffusionsschicht nach zumindest einem der Ansprüche 1 bis 12 oder einer Gasdiffusionselektrode nach Anspruch 13 in einer Brennstoffzelle, in einer Elektrolysezelle oder in einer Batterie, bevorzugt in einer Poyelektrolytmembran-Brennstoffzelle, in einer Direkt-Methanol-Brennstoffzelle, in einer Zink-Luft-Batterie oder in einer Lithium-Schwefel-Batterie.

## Claims

1. Gas diffusion layer comprising a substrate of carbonaceous material and a microporous layer, wherein the gas diffusion layer can be obtained using a method comprising the following steps:
i) dispersing carbon black having a BET surface area of at most 200 m²/g, carbon nanotubes having a BET surface area of at least 200 m²/g and having an average outer diameter (d₅₀) of at most 25 nm, and a dispersion-medium-containing mixture at a shear rate of at least 1,000 s⁻¹ and such that, in the produced dispersion, at least 90% of all the carbon nanotubes have an average agglomerate size of at most 25 µm, wherein the sum of the amounts of carbon black and carbon nanotubes is 1 to 15 wt.%, based on the total amount of the mixture,
ii) applying the dispersion produced in step i) to at least part of at least one side of the substrate and
iii) drying the dispersion applied in step ii).

2. Gas diffusion layer according to claim 1, **characterised in that** carbon nanotubes having an average outer diameter (d₅₀) of from 8 to 25 nm, preferably from 10 to less than 20 nm and particularly preferably from 12 to 18 nm, are used in step i).

3. Gas diffusion layer according to either claim 1 or claim 2, **characterised in that** carbon nanotubes having a BET surface area of more than 200 to 400 m²/g, preferably from 210 to 300 m²/g and particularly preferably from 220 to 280 m²/g, are used in step i).

4. Gas diffusion layer according to at least one of the preceding claims, **characterised in that** the mixture used in step i) contains, based on the carbon content of the mixture, 10 to 50 wt.%, preferably 20 to 40 wt.% and particularly preferably 25 to 35 wt.%, carbon nanotubes.

5. Gas diffusion layer according to at least one of the preceding claims, **characterised in that** carbon black having a BET surface area of from 20 to 100 m²/g and preferably from 40 to 80 m²/g is used in step i).

6. Gas diffusion layer according to at least one of the preceding claims, **characterised in that** the mixture used in step i) contains water as the dispersion medium, the amount of the dispersion medium being 50 to 98 wt.%, preferably 85 to 95 wt.% and particularly preferably 87 to 94 wt.%, based on the total amount of the mixture.

7. Gas diffusion layer according to at least one of the preceding claims, **characterised in that** the mixture applied in step ii) consists of:
- 1 to 15 wt.%, preferably 2 to 12 wt.% and particularly preferably 4 to 7 wt.%, of the sum of carbon black and carbon nanotubes, the carbon black having a BET surface area of at most 200 m²/g, the carbon nanotubes having a BET surface area of at least 200 m²/g and an average outer diameter (d₅₀) of at most 25 nm, the amount of carbon nanotubes being, based on the carbon content of the mixture, 10 to 50 wt.%, preferably 20 to 40 wt.% and more preferably 25 to 35 wt.% and the remainder to 100 wt.% of the carbon content being carbon black,
- 50 to 98 wt.%, preferably 85 to 95 wt.% and particularly preferably 87 to 94 wt.%, water as the dispersion medium,
- 0.1 to 10 wt.%, preferably 0.5 to 5 wt.% and particularly preferably 1 to 3 wt.%, polytetrafluoroethylene as a binder,
- 0 to 5 wt.% and preferably 1 to 4 wt.% polyethylene glycol as a film-former and
- 0 to 5 wt.% and preferably 0.5 to 2 wt.% hydroxypropyl cellulose as a viscosity adjuster.

8. Gas diffusion layer according to at least one of the preceding claims, **characterised in that** the mixture is dispersed in step i) at a shear rate of at least 2,000 s⁻¹ and preferably of at least 5,000 s⁻¹.

9. Gas diffusion layer according to at least one of the preceding claims, **characterised in that** the mixture is dispersed in step i) such that, in the produced dispersion, at least 90%, preferably at least 95% and particularly preferably all of the carbon nanotubes have an average agglomerate size of from 0.5 to less than 20 µm and preferably from 0.5 to less than 15 µm.

10. Gas diffusion layer according to at least one of the preceding claims, **characterised in that** the dispersing in step ii) is carried out in a ball mill, in a bead mill, in a sand mill, in a kneader, in a roller mill, in a static mixer, in an ultrasonic disperser, in a device which introduces shear forces through high pressures, high accelerations and/or high impact, or any combination of two or more of the above-mentioned devices.

11. Gas diffusion layer according to at feast one of the preceding claims, **characterised in that** it has an electrical resistance of less than 8 Ω·cm², preferably less than 7 Ω·cm², and more preferably less than 6 Ω·cm², at a compression of 100 N/cm².

12. Gas diffusion layer according to at least one of the preceding claims, comprising a substrate of carbonaceous material and a microporous layer, wherein:
a) the microporous layer is composed of 50 to 99.9 wt.%, preferably 70 to 99 wt.%, particularly preferably 75 to 95 wt.% and very particularly preferably 77 to 90 wt.%, of the sum of carbon black and carbon nanotubes and the remainder to 100 wt.% of binder, wherein the carbon black has a BET surface area of at most 200 m²/g, the carbon nanotubes have a BET surface area of at least 200 m²/g and an average outer diameter (d₅₀) of at most 25 nm and the amount of carbon nanotubes is 10 to 50 wt.%, preferably 20 to 40 wt.% and particularly preferably 25 to 35 wt.%, based on the carbon content of the microporous layer,
b) the gas diffusion layer has an electrical resistance of less than 8 Ω·cm² at a compression of 100 N/cm² and
c) the gas diffusion layer has a Gurley gas permeability of more than 2 cm³/cm²/s.

13. Gas diffusion electrode comprising a gas diffusion layer according to at least one of the preceding claims, wherein a catalyst layer is arranged on the microporous layer.

14. Method for producing a gas diffusion layer according to at least one of claims 1 to 12, which comprises the following steps:
i) dispersing carbon black having a BET surface area of at most 200 m²/g, carbon nanotubes having a BET surface area of at least 200 m²/g and having an average outer diameter (d₅₀) of at most 25 nm, and a dispersion-medium-containing mixture at a shear rate of at least 1,000 s⁻¹ and such that, in the produced dispersion, at least 90% of all the carbon nanotubes have an average agglomerate size of at most 25 µm,
ii) applying the dispersion produced in step i) to at least part of at least one side of the substrate and
iii) drying the dispersion applied in step ii) at a temperature of 40 to 150°C and
iv) optionally sintering the dried gas diffusion layer at a temperature of more than 150°C.

15. Use of a gas diffusion layer according to at least one of claims 1 to 12 or a gas diffusion electrode according to claim 13 in a fuel ceil, in an electrolytic cell or in a battery, preferably in a polyelectrolyte membrane fuel cell, in a direct methanol fuel cell, in a zinc-air battery or in a lithium-sulfur battery.

## Revendications

1. Couche de diffusion gazeuse, comprenant un substrat matériau carboné et une couche microporeuse, la couche de diffusion gazeuse pouvant être obtenue par un procédé comprenant les étapes :
i) de dispersion de noir de carbone présentant une surface BET d'au plus 200 m²/g, de nanotubes de carbone présentant une surface BET d'au moins 200 m²/g ainsi qu'un diamètre extérieur moyen (d₅₀) d'au plus 25 nm et un mélange contenant un milieu de dispersion à une vitesse de cisaillement d'au moins 1 000 secondes⁻¹ et, de sorte que, dans la dispersion produite, au moins 90 % des nanotubes de carbone présentent une taille moyenne d'agglomérat de 25 µm maximum, la somme des quantités de noir de carbone et de nanotubes de carbone par rapport à la quantité totale du mélange étant comprise entre 1 et 15 % en poids,
ii) d'application de la dispersion produite à l'étape i) sur au moins une partie d'au moins un côté du substrat ; et de
iii) de séchage de la dispersion effectuée à l'étape ii).

2. Couche de diffusion gazeuse selon la revendication 1, **caractérisée en ce que**, à l'étape i), on utilise des nanotubes de carbone présentant un diamètre extérieur moyen (d₅₀) compris entre 8 et 25 nm, de préférence entre 10 et moins de 20 nm et de manière particulièrement préférée entre 12 et 18 nm.

3. Couche de diffusion gazeuse selon la revendication 1 ou 2, **caractérisée en ce que**, à l'étape i), on utilise des nanotubes de carbone présentant une surface BET de plus de 200 à 400 m²/g, de préférence de 210 à 300 m²/g et de manière particulièrement préférée de 220 à 280 m²/g.

4. Couche de diffusion gazeuse selon au moins l'une des revendications précédentes, **caractérisée en ce que** le mélange utilisé à l'étape i) contient 10 à 50 % en poids, de préférence 20 à 40 % en poids et de manière particulièrement préférée 25 à 35 % en poids de nanotubes de carbone, par rapport à la teneur en carbone du mélange.

5. Couche de diffusion gazeuse selon au moins l'une des revendications précédentes, **caractérisée en ce que**, à l'étape i), on utilise du noir de carbone présentant une surface BET comprise entre 20 et 100 m²/g et de préférence entre 40 et 80 m²/g.

6. Couche de diffusion gazeuse selon au moins l'une des revendications précédentes, **caractérisée en ce que** le mélange utilisé à l'étape i) contient de l'eau comme milieu de dispersion, la quantité du milieu de dispersion par rapport à la quantité totale du mélange étant comprise entre 50 et 98 % en poids, de préférence entre 85 et 95 % en poids et de manière particulièrement préférée entre 87 et 94 % en poids.

7. Couche de diffusion gazeuse selon au moins l'une des revendications précédentes, **caractérisée en ce que** le mélange appliqué à l'étape ii) est constitué :
- de 1 à 15 % en poids, de préférence de 2 à 12 % en poids, et de manière particulièrement préférée de 4 à 7 % en poids de la somme du noir de carbone et des nanotubes de carbone, le noir de carbone présentant une surface BET d'au plus 200 m²/g, les nanotubes de carbone présentant une surface BET d'au moins 200 m²/g et un diamètre extérieur moyen (d₅₀) d'au plus 25 nm, la proportion des nanotubes de carbone, par rapport à la teneur en carbone du mélange, étant comprise entre 10 et 50 % en poids, de préférence entre 20 et 40 % en poids et de manière particulièrement préférée entre 25 et 35 % en poids, et le reste étant du noir de carbone à 100 % en poids de la teneur en carbone,
- de 50 à 98 % en poids, de préférence de 85 à 95 % en poids et de manière particulièrement préférée entre 87 et 94 % en poids d'eau comme milieu de dispersion,
- de 0,1 à 10 % en poids, de préférence de 0,5 à 5 % en poids et de manière particulièrement préférée de 1 à 3 % en poids de polytétrafluoroéthylène comme agent de liaison,
- de 0 à 5 % en poids et de préférence de 1 à 4 % en poids de polyéthylèneglycol comme agent filmogène et
- de 0 à 5 % en poids et de préférence de 0,5 à 2 % en poids d'hyroxypropylcellulose comme agent d'ajustement de viscosité.

8. Couche de diffusion gazeuse selon au moins l'une des revendications précédentes, **caractérisée en ce que** le mélange est dispersé à l'étape i) à une vitesse de cisaillement d'au moins 2 000 secondes⁻¹ et de préférence d'au moins 5 000 secondes⁻¹.

9. Couche de diffusion gazeuse selon au moins l'une des revendications précédentes, **caractérisée en ce que** le mélange de l'étape i) est dispersé de sorte que, dans la dispersion préparée, au moins 90 % de tous les nanotubes de carbone, de préférence au moins 95 % de tous les nanotubes de carbone, et de manière particulièrement préférée tous les nanotubes de carbone, présentent une taille moyenne d'agglomérat comprise entre 0,5 et moins de 20 µm et de préférence entre 0,5 et moins de 15 µm.

10. Couche de diffusion gazeuse selon au moins l'une des revendications précédentes, **caractérisée en ce que** la dispersion, à l'étape ii), est effectuée dans un broyeur à boulets, dans un broyeur à billes, dans un broyeur à sable, dans un malaxeur, dans un moulin à cylindres, dans un mélangeur statique, dans un disperseur ultrasonique, dans un dispositif qui introduit des forces de cisaillement par des pressions élevées, des accélérations élevées et/ou un impact élevé, ou dans toute combinaison d'au moins deux des dispositifs précédents.

11. Couche de diffusion gazeuse selon au moins l'une des revendications précédentes, **caractérisée en ce que** celle-ci présente, à une compression de 100 N/cm², une résistance électrique inférieure à 8 Ω•cm², de préférence inférieure à 7 Ω•cm² et de manière particulièrement préférée inférieure à 6 Ω•cm².

12. Couche de diffusion gazeuse selon au moins l'une des revendications précédentes comprenant un substrat de matériau carboné et une couche microporeuse, dans laquelle :
a) la couche microporeuse est constituée de 50 à 99,9 % en poids, de préférence de 70 à 99 % en poids, de manière particulièrement préférée de 75 à 95 % en poids, et de manière tout particulièrement préférée de 77 à 90 % en poids de la somme du noir de carbone et des nanotubes de carbone et le reste est constitué à 100 % en poids de l'agent de liaison, le noir de carbone présente une surface BET d'au plus 200 m²/g, les nanotubes de carbone présente une surface BET d'au moins 200 m²/g et un diamètre extérieur moyen (d₅₀) d'au plus 25 nm, et la quantité de nanotubes de carbone, par rapport à la teneur en carbone de la couche microporeuse, est comprise entre 10 et 50 % en poids, de préférence entre 20 et 40 % en poids et de manière particulièrement préférée entre 25 et 35 % en poids,
b) la couche de diffusion gazeuse présente une résistance électrique inférieure à 8 Ω•cm² à une compression de 100 N/cm², et
c) la couche de diffusion gazeuse présente une perméabilité aux gaz Gurley supérieure à 2 cm³/cm²/s,

13. Électrode à diffusion gazeuse comprenant une couche de diffusion gazeuse selon au moins l'une des revendications précédentes, dans laquelle une couche de catalyseur est disposée sur la couche microporeuse.

14. Procédé de formation d'une couche de diffusion gazeuse selon au moins l'une des revendications 1 à 12, comprenant les étapes ci-dessous :
i) la dispersion de noir de carbone présentant une surface BET d'au plus 200 m²/g, de nanotubes de carbone présentant une surface BET d'au moins 200 m³/g ainsi qu'un diamètre extérieur moyen (d₅₀) d'au plus 25 nm et un mélange contenant un milieu de dispersion à une vitesse de cisaillement d'au moins 1 000 secondes⁻¹ et, de sorte que, dans la dispersion produite, au moins 90 % des nanotubes de carbone présentent une taille moyenne d'agglomérat de 25 µm maximum,
ii) l'application de la dispersion produite à l'étape i) sur au moins une partie d'au moins un côté du substrat ; et
iii) le séchage de la dispersion effectuée à l'étape ii) à une température comprise entre 40 et 150 °C et
iv) éventuellement, le frittage de la couche de diffusion gazeuse séchée à une température supérieure à 150 °C.

15. Utilisation d'une couche de diffusion gazeuse selon au moins l'une des revendications 1 à 12 ou d'une électrode de diffusion gazeuse selon la revendication 13 dans une pile à combustible, dans une cellule d'électrolyse ou dans une batterie, de préférence dans une pile à combustible à membrane poyélectrolytique, dans une pile à combustible de combustion directe du méthanol, dans une batterie zinc-air ou dans une batterie lithium-sulfure.
